Europäisches Patentamt

European Patent Office

Office européen des brevets

(19)

(11) Publication number: **0 062 618**
A2

(12) # EUROPEAN PATENT APPLICATION

(21) Application number: **82830073.1**

(22) Date of filing: **25.03.82**

(51) Int. Cl.³: **B 65 G 15/20**

(30) Priority: **08.04.81 IT 6748981**

(43) Date of publication of application: **13.10.82**
**Bulletin 82/41**

(84) Designated Contracting States: **CH DE FR GB IT LI NL**

(71) Applicant: **Bruno, Ludovico, Strada Caselle 55, I-10040 Leini - (Torino) (IT)**

(72) Inventor: **Bruno, Ludovico, Strada Caselle 55, I-10040 Leini - (Torino) (IT)**

(74) Representative: **Jacobacci, Filippo et al, c/o JACOBACCI-CASETTA & PERANI S.n.c. Via Alfieri, 17, I-10121 Torino (IT)**

(54) **Belt conveyor device, particularly for conveying elongate articles arranged transverse the direction of conveyance.**

(57) A belt conveyor device of the type comprising a pair of main conveyor belts disposed one downstream of the other, includes a pair of auxiliary conveyor belts also disposed one downstream of the other, and beside the main conveyor belts. The transition zone between the two auxiliary conveyor belts is offset longitudinally relative to the transition zone between the two main conveyors belts. The conveyor device is particularly useful for conveying elongate articles which are arranged transverse the direction of conveyance.

EP 0 062 618 A2

ACTORUM AG

" Belt conveyor device, particularly for conveying elongate articles arranged transverse the direction of conveyance".

The present invention relates to belt conveyor devices.

More particularly, the invention concerns a belt conveyor device of the type comprising a pair of conveyor belts disposed one downstream of the other.

Each of the conveyor belts has a loading end and a discharge end for the articles conveyed. In the present description and in the following claims, the term "transition zone" is intended to refer to the zone between the discharge end of the upstream conveyor and the loading end of the downstream conveyor. The terms "longitudinal" and "longitudinally" are intended to refer to a direction parallel to the direction of conveyance, while the terms "transverse" and "transversely" are intended to refer to a horizontal direction perpendicular to the direction of conveyance. Finally, the terms "conveyor belts" are also intended to mean equivalent conveyor devices, such as, for example, those constituted by a series of parallel circular-section bands mounted on grooved rollers.

The belt conveyor devices of the type indicated above have several drawbacks when they are used for conveying elongate articles arranged transverse the longitudinal direction of conveyance.

These drawbacks are particularly apparent when the articles conveyed have a flat base and a rounded upper surface. When an article having such a shape reaches the zone of transition between the two conveyor belts, it may overturn and remain stuck in this transition zone, possibly obstructing the flow of products and resulting in damage to the article being conveyed, and obliging the operator to stop the machine, with consequent loss of time in the working cycle.

The object of the present invention is to provide a belt conveyor device of the above-mentioned type which allows these drawbacks to be avoided.

In order to achieve this object, the invention provides a belt conveyor device including a pair of main conveyor belts disposed one downstream of the other, characterised in that it further includes a pair of auxiliary conveyor belts also disposed one downstream of the other and beside the main conveyor belts, and in that the transition zone between the auxiliary conveyor belts is offset longitudinally relative to the transition zone between the two main conveyor belts.

In the belt conveyor device according to the present invention, the articles to be conveyed are located so as to rest partly on a main conveyor belt and partly on an auxiliary conveyor belt. Thus, when the article to be conveyed reaches the transition zone between the two main conveyor belts, a part thereof rests on that portion of an auxiliary conveyor belt which is adjacent the transition zone. The overturning of the article conveyed, and its possible entrapment in the transition zone between the two main conveyor belts, is thus avoided.

Further characteristics and advantages of the present invention will emerge from the description which follows with reference to the appended drawings, provided purely by way of non-limiting example, in which:

Figure 1 is a perspective view of a part of a belt conveyor device according to the present invention;

Figure 2 is a plan view of the device of Figure 1, and

Figure 3 is a sectional view taken on the line III-III of Figure 2.

In the drawings, a belt conveyor device, generally indicated 1, comprises a support structure including a pair of vertical walls 2, and two main conveyor belts 3, 4 disposed one downstream of the other.

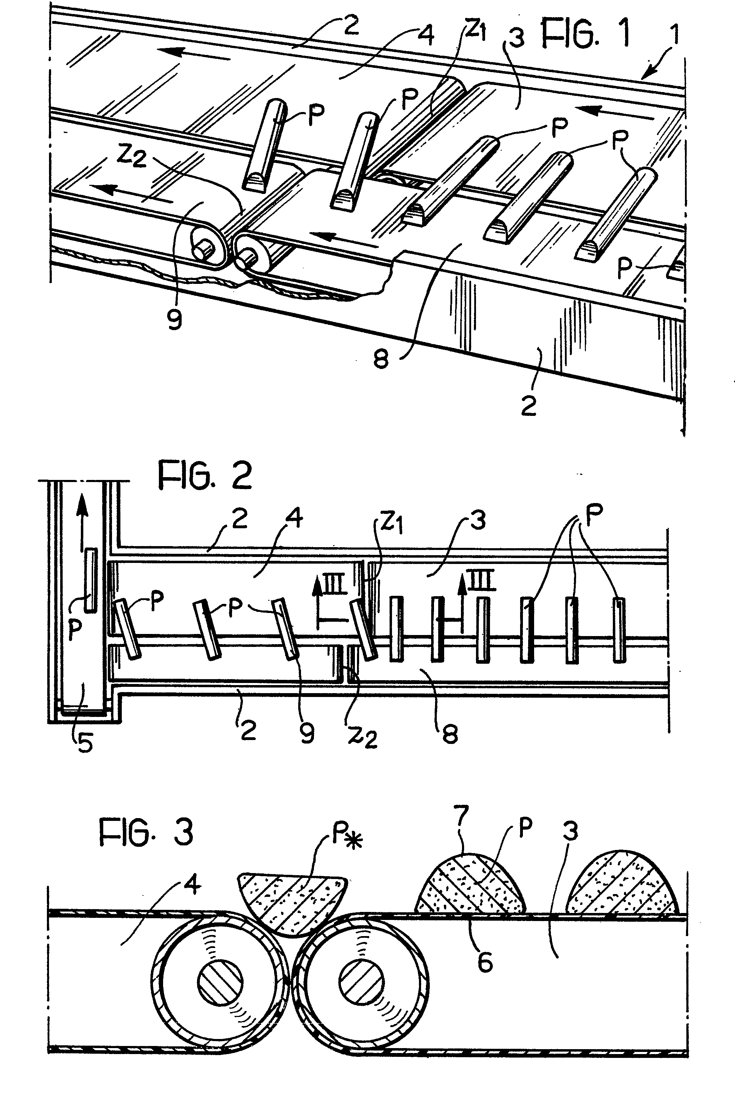

In the particular example illustrated, the main conveyor belts 3, 4 are used to feed a series of products P of elongate shape, lying transverse the longitudinal direction of conveyance, to a transverse conveyor 5 (see Figure 2) arranged to feed the products, in turn, to a packaging machine.

The constructional details of the various conveyor belts and the means for driving these conveyor belts are not shown in the appended drawings, since they are well known in this field of the art and do not fall within the scope of the present invention.

- 4 -

Moreover, the omission of these constructional details from the drawings makes the latter simpler, and easier and quicker to understand.

In the example illustrated, the main downstream conveyor belt 4 moves at a greater speed than the main upstream conveyor belt 3. The products P passing from the main conveyor belt 3 to the main conveyor belt 4 are therefore accelerated and spaced from each other, before they are fed to the transverse conveyor belt 5.

The devices arranged to supply the products P to the loading end of the main upstream conveyor belt 3 are not illustrated since they do not fall within the scope of the present invention and are known in themselves.

As is clearly shown in Figure 3, the conveyor device according to the invention is particularly advantageous in the case in which each product P has a flat base 6 and a rounded upper surface 7. Indeed, in this case, if the two conveyor belts 3, 4 are used alone, the products P disposed transverse the direction of conveyance could overturn upon reaching the transition zone between the two main conveyor belts 3, 4. By way of example, reference P* shows a product which has overturned in the transition zone between the two conveyor belts. Should such an event occur, the operator would be forced to stop the machine manually with a consequent loss of time. Moreover, the product P* could be damaged.

The conveyor device according to the invention avoids this drawback by the presence of a pair of auxiliary conveyor belts 8, 9 also disposed one downstream of the other, and beside the two main conveyor belts 3, 4.

The two auxiliary conveyor belts 8, 9 have a transition zone, indicated Z2 in Figure 1, which is offset longitudinally downstream of the transition zone Z1 between the two main conveyor belts 3, 4.

Moreover, as illustrated in Figures 1 and 2, the products P are supplied to the conveyor device so that one part thereof rests on the main conveyor belt and the other part thereof rests on an auxiliary conveyor belt.

When a product P reaches the transition zone Z1, part of its base 6 rests on the auxiliary upstream conveyor belt 8, which avoids the above-mentioned drawback. Naturally, a similar situation occurs when the products P reach the transition zone Z2 between the two auxiliary conveyor belts 8, 9.

In the example described with reference to the drawings, the main upstream conveyor belt 3 and the auxiliary upstream conveyor belt 8 move together at a first speed, while the main downstream conveyor belt 4 and the auxiliary downstream conveyor belt 9 move together at a second speed greater than the first speed.

As a result of the differences in speed between the auxiliary upstream conveyor belt 8 and the main downstream conveyor belt 4, each product P undergoes a slight rotation in the horizontal plane of con-

- 6 -

veyance, when it passes the transition zone Z1, due to the fact that the part thereof resting on the conveyor belt 4 travels at a higher speed than the remaining part as long as the latter remains on the conveyor belt 8. Therefore, the products P are supplied to the transverse conveyor belt 5 by the conveyor belts 4, 9 in a condition inclined to the transverse direction. The part of each product P which is in contact with the downstream conveyor belt 4 enters into contact with the transverse conveyor belt 5 before the remaining part of the product. The latter consequently undergoes a further rotation at the moment of unloading onto the conveyor belt 5, bringing it back into alignment.

The rotation which is imparted to the products P passing through the transition zone Z1 serves to allow a regular loading of the products onto the conveyor belt 5 (which is slightly lower than the conveyor belt 4), and also to prevent the products reaching the belt 5 with the part which rests on the belt 9 more advanced than the part which rests on the belt 4. In this case, there would be the risk of the products not being aligned when they reach the conveyor belt 5.

Naturally, while the principle of the invention remains the same, the details of construction and forms of embodiment may be varied widely from that described and illustrated purely by way of example, without departing from the present invention.

For example, the main downstream conveyor belt 4 could move at a lower speed than the main upstream conveyor belt 3; moreover, the transition zone Z2 between the two auxiliary conveyor belts 8, 9 may be offset longitudinally upstream relative to the transition zone Z1 between the main conveyor belts 3, 4.

0062618

- 8 -

CLAIMS:

1. Belt conveyor device, particularly for conveying elongate articles arranged transverse the direction of conveyance, including a pair of main conveyor belts (3, 4) disposed one downstream of the other, characterised in that the device further includes a pair of auxiliary conveyor belts (8, 9) also disposed one downstream of the other and beside the main conveyor belts (3, 4), and in that the transition zone (Z2) between the two auxiliary conveyor belts (8, 9) is offset longitudinally relative to the transition zone (Z1) between the two main conveyor belts (3, 4).

2. Conveyor device according to Claim 1, in which the main downstream conveyor belt (4) moves at a greater speed than the main upstream conveyor belt (3), characterised in that the auxiliary upstream conveyor belt (8) moves at the same speed as the main upstream conveyor belt (3).

3. Conveyor device according to Claim 2, characterised in that the transition zone (Z2) between the two auxiliary conveyor belts (8, 9) is offset longitudinally downstream of the transition zone (Z1) between the two main conveyor belts (3, 4).

4. Belt conveyor device according to Claim 2, characterised in that the auxiliary downstream conveyor belt (9) moves at the same speed as the main downstream conveyor belt (4).

1/1      0062618

FIG. 1

FIG. 2

FIG. 3